# EUROPEAN PATENT SPECIFICATION

(11) **EP 0 613 991 B1**
(45) Date of publication and mention of the grant of the patent: **15.10.1997**
(21) Application number: 94301236.9
(22) Date of filing: 22.02.1994
(51) Int. Cl.: E21B 7/20, E21B 21/12

(54) **Apparatus and for driving pipes into the ground**
Verfahren und Vorrichtung zum Eintreiben von Rohren in den Boden
Procédé et dispositif d'enfoncement de tuyaux dans le sol

(30) Priority: 03.03.1993 JP 65943/93; 03.03.1993 JP 65948/93; 22.03.1993 JP 85112/93; 22.03.1993 JP 85113/93; 30.03.1993 JP 93866/93
(43) Date of publication of application: 07.09.1994
(60) Divisional application: 96113215.6
(73) Proprietor: TOKYO GAS CO., LTD., Minato-ku Tokyo 105 (JP); Kabushiki Kaisha Isekikaihatsukohki, Shibuya-Ku Tokyo (JP)
(72) Inventor: Hayashi, Mitsutoshi, Ohmiya, Saitama (JP); Fujita, Akitaka, Meguro-ku, Tokyo (JP); Nagashima, Shingo, Minato-ku, Tokyo (JP); Kurashina, Minoru, Suginami-ku, Tokyo (JP); Kajiyama, Makoto, Zama, Kanagawa (JP); Uno, Hideki, Tokorozawa, Saitama (JP)
(74) Representative: Pacitti, Pierpaolo A.M.E.

(56) References cited:
- EP-A- 0 291 193
- JP-A- 1 260 197
- US-A- 4 176 985
- PATENT ABSTRACTS OF JAPAN vol. 015, no. 329 (M-1149) 21 August 1991 & JP-A-03 125 796 (NKK CORP;OTHERS: 01) 29 May 1991
- PATENT ABSTRACTS OF JAPAN vol. 014, no. 416 (M-1021) 7 September 1990 & JP-A-02 161 095 (KUBOTA LTD;OTHERS: 02) 20 June 1990

## Description

### BACKGROUND OF THE INVENTION

### 1. Field of the Invention

The present invention relates to a method of injecting lubricant or back-filling material into a space between the outside of double-wall pipes and the ground in laying a conduit comprised of double-wall pipes each of which comprises an inner pipe and an outer pipe, by supplying lubricant or back-filling material to a check valve mounted in an outer pipe of a double-wall pipe, through a lubricant or back-filling material supply pipe introduced through sheath pipes each of which is provided between an inner pipe and an outer pipe of each double-wall pipe, and injecting lubricant or back-filling material into a space between the outside of double-wall pipes and the ground through the check valve, while laying a conduit in the ground, and to an apparatus for injecting lubricant or back-filling material into a space between the outside of double wall pipes and the ground.

### 2. Description of the Prior Art

Laying sewer conduit or service water conduit in the ground is carried out by tunneling through the ground by a tunneling machine, while the tunneling machine followed by pipes such as Hume pipes and steel pipes is propelled by a pipe-jacking machine, wherein it is carried out to inject lubricant into a space between the outside of the tunneling machine and the ground and between the outside of pipes and the ground. Further, in the above-mentioned pipe-jacking method, it is also carried out to inject back-filling material into a space between the outside of pipes forming a conduit and the ground, after having laying the conduit.

Each of pipes with diameter over 800mm used in the above-mentioned pipe-jacking method is formed with a hole at a given position. The hole is connected through a hose with a lubricant or back-filling material feeder, which is provided on the ground. While propelling pipes, lubricant is injected into a space between the outside of pipes and the ground, by supplying lubricant through the hose to the hole and injecting lubricant to the space through the hole so that frictional force can be decreased, or after having laid a desired conduit in the ground, back-filling material is injected into a space between the outside of pipes and the ground so that the space between the outside of pipes and the ground is filled with back-filling material.

On the other hand, there is a case where a conduit for supplying gas such as coal gas or fuel gas and natural gas and others is laid in the ground. Since a gas pipe requires the higher gastightness, gas pipes are connected with each other by mutually welding the edges of pipes, wherein the weld is inspected by non-destructive inspection about whether a conduit for supplying gas without welding defect is formed.

Since in such a way, a gas pipe requires the higher gastightness, it is thought that a gas pipe cannot be provided with a hole for injecting lubricant or back-filling material to a space between the outside of pipes and the ground. Further, it is thought that the edge of gas pipe cannot be brought into immediate contact with a push ring of a pipe-jacking machine so that gas pipes cannot be propelled by a pipe-jacking machine, because there is the possibility that the edge of gas pipe will be damaged by the push ring.

Since there is the above-mentioned problem, when laying a conduit for gas, in general, a conduit comprised of Hume pipes with the diameter sufficiently larger than the outside of gas pipe is first laid by the pipe-jacking method, and a space between the outside of the conduit comprised of Hume pipes and the ground is filled with back-filling material, then a conduit for gas supply comprised of gas pipes is formed within the conduit comprised of Hume pipes.

Recently, it is developed that double-wall pipes each of which is composed of an outer pipe and an inner pipe inserted into the outer pipes are prefabricated (see for example US-A-5 063 967 and US-A-5 241 993), and thrust is applied to the outer pipes from a pipe-jacking machine so that the inner pipes and the outer pipes can be simultaneously propelled. In this pipe-jacking method, every time a individual double-wall pipe is propelled into the ground, the edge of an inner pipe of the individual double-wall pipe which has been propelled into the ground is welded with the edge of new individual double-wall pipe which is disposed in a start vertical shaft so that a conduit comprised of inner pipes with the higher gastightness can be laid by one pipe-jacking process.

Each of the above-mentioned double-wall pipes is preliminarily provided with a sheath pipe into which a lubricant or back-filling material supply pipe is inserted, between the inner pipe and the outer pipe of each double-wall pipe and with a check valve for injecting lubricant or back-filling material into a space between the outside of double-wall pipes and the ground, in the outer pipe, wherein the check valve is connected with the sheath pipe. While propelling double-wall pipes in the ground, lubricant is injected into a space between the outside of double-wall pipes and the ground, or after having laid a conduit comprised of double-wall pipes,back-filling material is injected into a space between the outside of double-wall pipes and the ground, by inserting a back-filling material supply pipe into sheath pipes each of which is provided between the inner pipe and the outer pipe of each double-wall pipe, supplying back-filling material to each check valve, and injecting back-filling material through each check valve into a space between the outside of double-wall pipes and the ground.

However, the above-mentioned operation in which lubricant or back-filling material is injected into a space between the outside of double-wall pipes and the ground is done by hand work, wherein it is done by hand work to move the head of a lubricant or back-filling material supply pipe to the position at which the head of lubricant or back-filling material supply pipe is opposed to the desired check valve, through sheath pipes, which work takes a long time and labor.

### BRIEF SUMMARY OF THE INVENTION

It is an object of the present invention to provide a method of easily moving the head of a lubricant or back-filling material supply pipe to the desired position, in a sheath pipe provided between an inner pipe and an outer pipe of each double-wall pipe, with a short time, and an apparatus therefor.

It is a second object of the present invention to provide a method of injecting lubricant or back-filling material to a space between the outside of double-wall pipes and the ground without being influenced by an elongation of a lubricant or back-filling material supply pipe, even if the elongation of a lubricant or back-filling material supply pipe is generated in drawing the lubricant or back-filling material supply pipe in a sheath pipe provided between an inner pipe and an outer pipe of each double-wall pipe, and an apparatus therefor.

It is a third object of the present invention to provide a method of easily drawing a lubricant or back-filling material supply pipe in sheath pipes each of which is provided between an inner pipe and an outer pipe of each double-wall pipe.

It is a fourth object to provide a method of easily moving a lubricant or back-filling material supply pipe in sheath pipes each of which is provided between an inner pipe and an outer pipe of each pipe, even if there is an foreign matter within the sheath pipes.

To achieve the first object of the present invention, the present invention is characterized in that a wire is inserted into a sheath pipe provided between an inner pipe and an outer pipe of a double-wall pipe, from one terminal end toward the other terminal end of the sheath pipe, and the wire is connected with a lubricant or back-filling material supply pipe, thereafter the wire is wound so that the lubricant or back-filling material supply pipe is drawn by the wire into the sheath pipe to the position at which an outlet of the lubricant or back-filling material supply pipe is opposed to a check valve mounted in the outer pipe, when lubricant or back-filling material is supplied to the check valve through the lubricant or back-filling material supply pipe, and the supplied lubricant or back-filling material is injected through the check valve into a space between the outside of the double-wall pipe and the ground.

According to the above-mentioned invention, without recourse to hand work, the lubricant supply pipe or the back-filling material supply pipe can be inserted so that the outlet of the lubricant supply pipe or the back-filling material supply pipe reaches the desired position.

To be more precise, when an individual double-wall pipe is propelled, a wire unwound from a winch mounted in a tunneling machine is preliminarily inserted into the sheath pipe, and the the wire is connected with an terminal end of the lubricant or back-filling material supply pipe provided in a start vertical shaft. Then, the tunneling machine followed by a double-wall pipe or double-wall pipes is propelled by a pipe-jacking machine, while the ground is excavated by the tunneling machine, and at the same time, the wire is wound onto the winch so that together with winding of the wire, the lubricant or back-filling material supply pipe is drawn out into the sheath pipe. Further, the lubricant or back-filling material supply pipe is provided with scale marks in the longitudinal direction thereof so that the length by which the lubricant or back-filling material supply pipe is drawn out can be read from the scale marks so that the head portion of the lubricant or back-filling material supply pipe can be detected while propelling double-wall pipes.

Accordingly, when the ahead portion of the lubricant or back-filling material supply pipe reaches the position at which the head portion is opposed to a check valve mounted in an outer pipe of a double-wall pipe, lubricant or back-filling material can be injected to a space between the outside of double-wall pipes and the ground by driving the lubricant or back-filling material feeder.

Further, to achieve the second object of the present invention, the invention is characterized in that a lubricant or back-filling material supply pipe, which is provided with an injecting member having two packing means arranged at a given interval and an outlet thereof disposed between the two packing means, is moved in a sheath pipe provided between an inner pipe and outer pipe of a double-wall pipe to a position in which the injecting member is opposed to a check valve provided in the outer pipe, and when the injecting member reaches the above-mentioned position, the two packing means are inflated so that the inside of the sheath pipe can be partitioned by the two packing means and thereby the injecting member can fixed to the sheath pipe, and thereafter, lubricant or back-filling material is injected through the lubricant or back-filling material supply pipe and the check valve to a space between the outside of double-wall pipes and the ground.

According to the above-mentioned invention, the injecting member with the outlet disposed between the two packing means can be opposed to the check valve of double-wall pipe, even if an elongation of the lubricant supply pipe or the back-filling material supply pipe is generated when it is drawn in the sheath pipe.

To be more precise, when lubricant or back-filling material is injected to a space between the outside of double-wall pipes and the ground, the inside of the sheath pipe is partitioned by the two inflated packing means. Accordingly, if the check valve is positioned between the two packing means,lubricant or back-filling material can be surely injected through the check valve to a space between the outside of double-wall pipes and the ground. Particularly, lubricant or back-filling material can be easily injected from the outlet of the injecting member to the inside of the sheath pipe partitioned by the two packing means without being influenced by an elongation of the lubricant supply pipe or the back-filling material supply pipe by setting an interval between the two packing means to a length of individual double-wall pipe or thereover.

Further, to achieve the third object of the present invention, the present invention is characterized in that a lubricant or back-filling material supply pipe is moved in sheath pipes each of which is provided between an inner pipe and an outer pipe of each double-wall pipe, while lubricant or back-filling material is intermittently injected from the outlet of the injecting member to the inside of the sheath pipes while the lubricant or back-filling material supply pipe is moved in the sheath pipe.

According to the above-mentioned invention, the lubricant or back-filling material supply pipe is drawn in the sheath pipes, while lubricant or back-filling material is intermittently injected to the inside of the sheath pipes so that lubricant or back-filling material acts as lubricant interposed between the sheath pipes and injecting member, thereby the winch being able to be miniaturized, and an elongation of the lubricant or back-filling material supply pipe being able to be decreased.

Further, to achieve the fourth object of the present invention, the invention is characterized in that an injecting member is connected with a cleaning member which is brought into contact with the inner surface of sheath pipes each of which is provided between an inner pipe and an outer pipe of each double-wall pipe so that the inner surface of sheath pipes can be cleaned by the cleaning member with drawing the lubricant or back-filling material into the sheath pipe.

According to the above-mentioned invention, the inner surface of the sheath pipes can be cleaned by the cleaning member with drawing the lubricant or back-filling material supply pipe in sheath pipes. Thereby, the inside of the sheath pipe can be always kept cleaned so that the lubricant supply pipe or the back-filling material supply pipe can be easily drawn. Particularly, the inside of sheath pipes can be surely cleaned by using the cleaning member made of flexible material.

According to the present invention, since operations for injecting back-filling material into a space between the outside of the conduit which has been laid and the ground may be conducted both with inserting a back-filling material supply pipe into sheath pipes of double-wall pipes from a side of one vertical shaft and with inserting the back-filling material supply pipe into sheath pipes of double-wall pipes from a side of the other side, back-filling material pipe may have a nearly half length of the conduit. Therefore, the length of back-filling material supply pipe can be shortened as compared with a case where back-filling material is injected into a space between the outside of the conduct and the ground over the full length of the conduit from a side of one vertical shaft to a side of the other vertical shaft so that the frictional force between the back-filling material supply pipe and the sheath pipe can be reduced and the diameter of the back-filling material supply pipe can be made small.

Accordingly, a back-filling material feeder, for example the pressure pump's ability can be increased and a winder for the back-filling material supply pipe can be small-sized. Further, an outer pipe of double-wall pipe can be made thin while the size of an inner pipe thereof can be maintained.

### BRIEF DESCRIPTION OF THE DRAWINGS

In the drawing:

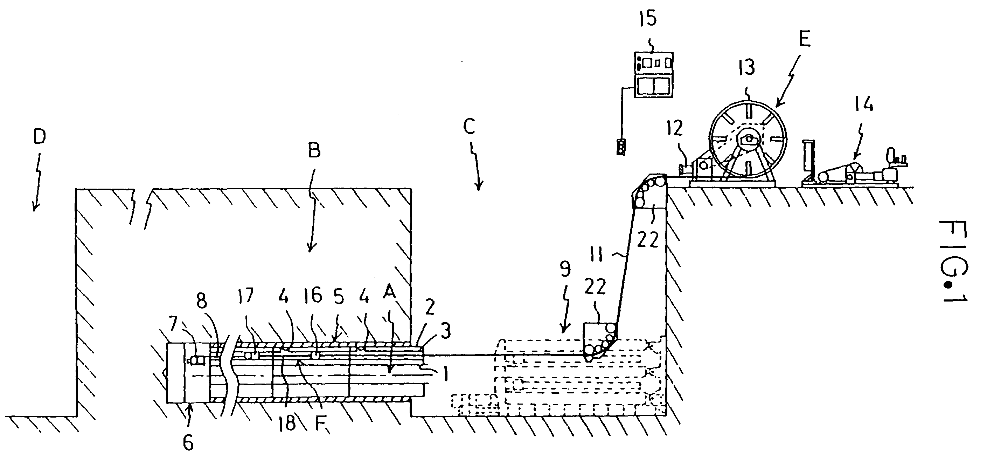

Fig. 1 is a view for illustrating a state where lubricant is injected into a space between double-wall pipes which are propelling and the ground;

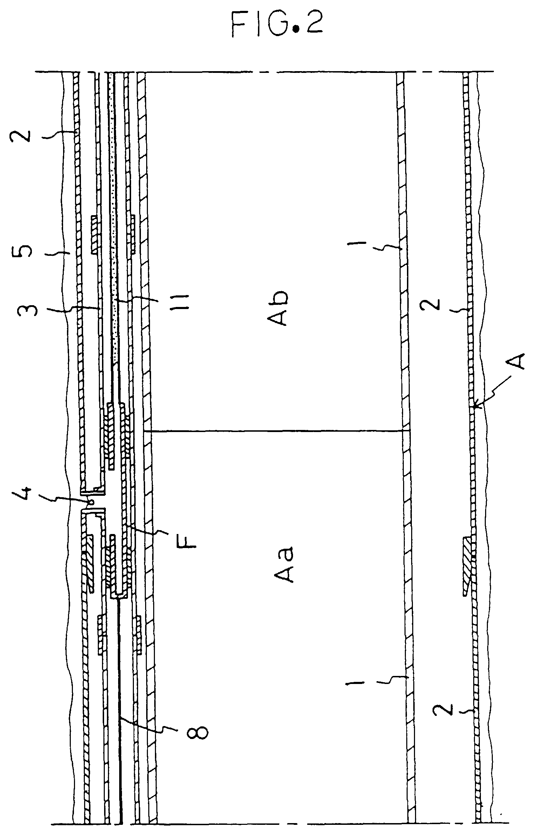

Fig. 2 is a view for illustrating the structure of double-wall pipes and a state where lubricant or back-filling material is injected into a space between double-wall pipes and the ground;

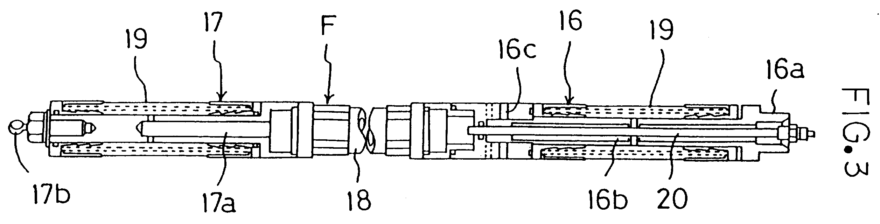

Fig. 3 is a view for illustrating the structure of an injecting material;

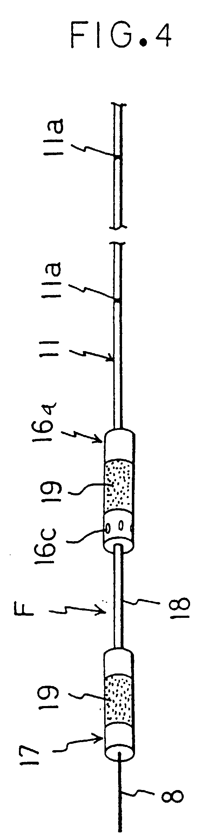

Fig. 4 is a view for illustrating an lubricant supply pipe or a back-filling material supply pipe which is marked with degrees;

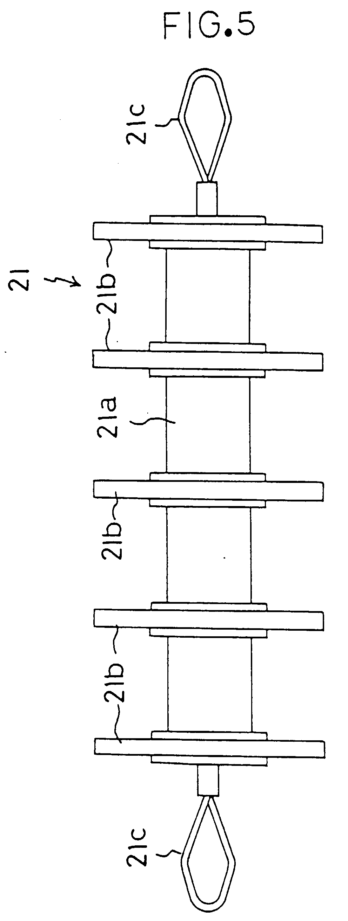

Fig. 5 is a view for illustrating the structure of a cleaning member;
Fig. 6 is a view for illustrating the steps of injecting back-filling material into a space between the conduit which has been laid and the ground, wherein an initial preparatory step is shown;
Fig. 7 is a view for illustrating a state where injection of back-filling material into a space between the conduit and the ground is started;
Fig. 8 is a view for illustrating a state where back-filling material is injected into a space between the conduit and the ground while a back-filling material supply pipe is drawn back;
Fig. 9 is a view for illustrating a preparatory operation for injecting back-filling material into a space between the conduit and the ground with inserting a back-filling material supply pipe into a sheath pipe from a side of the other vertical shaft after injecting back-filling material into a space between the conduit and the ground with inserting the back-filling material supply pipe into the sheath pipe from a side of one vertical shaft;
Fig. 10 is a view for illustrating a state where injection of back-filling material into a space between the conduit and the ground with inserting a back-filling material supply pipe into a sheath pipe is started; and
Fig. 11 is a view for illustrating a state where a space between the full conduit and the ground has been filled with back-filling material.

### DETAILED DESCRIPTION OF THE PREFERRED EMBODIMENT

First, the structure of double-wall pipe A is explained. Double-wall pipe A comprises inner pipe 1 and outer pipe 2. Inner pipe 1 is held by means of brackets (not shown ) provided between inner pipe 1 and outer pipe 2 so that inner pipe 1 is movable relatively to outer pipe 2 both in the longitudinal direction and in the circumferential direction. Inner pipe 1 and outer pipe 2 are made of steel pipe with the preset diameter and length, respectively.

In the embodiment of the invention, double-wall pipe A is provided with a view to supplying combustible gas wherein inner pipe 1 requires the higher airtightness. Therefore, when new double-wall pipe Ab is connected to double-wall pipe Aa which has been propelled, inner pipe 1 of new double-wall pipe Ab and double-wall pipe Aa which has been propelled are welded to each other all the circumference.

One or plural sheath pipes 3 are provided in the longitudinal direction of double-wall pipe A between inner pipes 1 and outer pipes 2. Outer pipe 2 is provided with check valve 4 at the given position, which is connected with sheath pipe 3 and opened outward of outer pipe 2. Check valve 4 is used for injecting lubricant or back-filling material into space 5 formed between outer pipes 2 and the ground and prevents subterranean water from penetrating into the inside of double-wall pipes A.

Then, a method of injecting lubricant or back-filling material into space 5 formed between double-wall pipes A and the ground is explained together with an apparatus therefor. Winch 7 is mounted in the inside of tunneling machine 6 positioned at the head. As tunneling machine 6, a known tunneling machine which can carry out a semi-shield method is used.

Wire 8 which has the length longer than the full laying length of double-wall pipes A preset (the full length of conduit B) is wound round winch 7. Winch 7 is driven in such a direction that wire 8 is wound. While wire 8 is unwound, wire 8 is tensioned so that winch 7 is reversed. Tunneling machine 6 is provided with winches 7 by number corresponding to the number of sheath pipes 3.

The above-mentioned tunneling machine 6 is followed by double-wall pipes A. Tunneling machine 6 is operated by which the ground is excavated, while tunneling machine 6 and double-wall pipes A are propelled toward arrival vertical shaft D by pipe-jacking machine 9 provided in start vertical shaft C. Lubricant injected into space 5 between the outside of outer pipe 2 and the ground while tunneling machine 6 and double-wall pipes A are propelled reduces frictional forces between double-wall pipes A and the ground. After conduit B comprised of double-wall pipes A has been laid between start vertical shaft C and arrival vertical shaft D, back-filling material is injected into space 5 between the outside of outer pipes 2 and the ground so that space 5 is filled with back-filling material.

The procedures in which a lubricant or back-filling material supply pipe is inserted into sheath pipe 3 in case of injecting lubricant or back-filling material into space 5 while propelling double-wall pipes A and in case of injecting back-filling material into space 5 after conduit B has been laid are substantially the same. Accordingly, then, a case where lubricant is injected into space 5 is representatively explained.

Supply pipe 11 for lubricant is made of flexible material. Supply pipe 11 is wound on drum 13 which is driven by drive 12. An end of supply pipe 11 is connected with pump 14 for forcing lubricant. Pump 14 is connected with a tank (not shown ) containing lubricant. Numeral 15 designates a control panel for controlling drive 12, drum 13 and pump 14. Lubricant feeder E comprises drive 12, drum 13, pump 14, a tank and others.

Injecting member F is connected with the other end of supply pipe 11. Injecting member F has two packing means 16, 17 disposed at a given interval, which are connected with hose 18. An interval between packing means 16, 17 is preferably enough bigger than a size of a space where check valve 4 is disposed.

Packing means 16, 17 have rubber tubes 19, respectively. Filling member F connected with the other end of supply pipe 11 is moved into sheath pipe 3 so that injecting members F are positioned at a distance from each other and at the desired relative positions to sheath pipe 3, thereafter compressed gas is supplied into rubber tubes 19 to inflate rubber tube 19 so that rubber tube 19 is brought closely into contact with the inside of sheath pipe 3 by which injecting member F is fixed to sheath pipe 3 and an airtight space between packing means 16, 17 is formed.

Packing means 16 is provided with nipple 16a one end of which is connected with supply pipe 11. A gas pipe 20 through which compressed gas as compressed air or nitrogen gas is passed is provided in packing means 16, and a path 16b for flowing lubricant is formed between the inside of packing means 16 and gas pipe 20. Packing means 16 is formed at the other end thereof with outlet 16c through which lubricant is injected into sheath pipe 3. The other end of gas pipe 20 opens within hose 18 so that compressed gas passed through gas pipe 20 is supplied through to packing means 17.

Packing means 17 has therein path 17a into which compressed gas is passed so that rubber tube 18 is inflated by compressed gas. Packing means 17 is provided at the forward end thereof with hook 17b to which wire 8 wound on winch 7 or hereinafter mentioned cleaning member 21 is connected.

Supply pipe 11 has marks 11a at regular intervals, for example at intervals corresponding to unit length of a double-wall pipe A or the length of plurality of double-wall pipes A. Therefore, when injecting member F and supply pipe 11 are moved in sheath pipe 3, a relative position of injecting member F to sheath pipe 3 can be determined by checking marks 11a.

Cleaning member 21 is provided at the forward end of injecting member F to clean the inside of sheath pipe 3. Cleaning member 21 facilitates the travel of injecting member F and supply pipe 11 by removing foreign material as lubricant or others which stay in sheath pipe 3.

Cleaning member 21 comprises shaft 21a and a plurality of cleaning plates 21b arranged on shaft 21a at given intervals. Each cleaning plate 21b has the shape which nearly equals to that of cross section of within sheath pipe 3. Particularly when cleaning plate 21b is made of a rubber plate having the suitable flexibility and rigidity, the outside of cleaning plate 21b is brought into contact with the inside of sheath pipe 3 so that the inside of sheath pipe 3 can be surely cleaned. Further, cleaning member 21 is provided at both sides thereof with connecting portion 21c for connecting cleaning member 21 with injecting member F and wire 8, respectively.

Then, a procedure for injecting lubricant into space 5 formed between double-wall pipes A and the ground while propelling double-wall pipes A is explained.

Prior to propelling double-wall pipes A, tunneling machine 6 is propelled. The propulsion is carried out by propelling tunneling machine 6 with pipe-jacking machine 9, while driving cutter mounted on the top face of tunneling machine 6. After tunneling machine 6 has been propelled, a first double-wall pipe A to be arranged at the head of conduit B, that is double-wall pipe A to be positioned next to arrival vertical shaft D is disposed between tunneling machine 6 and pipe-jacking machine 9.

Thereafter, wire 8 is unwound from winch 7 mounted on tunneling machine 6 by human strength, wire 8 is passed through the inside of tunneling machine 6 and the inside of sheath pipe 3 provided in double-wall pipes A, drawn out from tunneling machine 6 toward pipe-jacking machine 9, and is connected with connecting portion 21c of connecting member 21, thereby wire 8 is connected with cleaning member 21, injecting member F, and supply pipe 11 by which the preparation for propelling double-wall pipe A disposed on pipe-jacking machine 9 is finished.

Then, pipe-jacking machine 9 is driven so that tunneling machine 6 and double-wall pipe A are propelled with pipe-jacking machine 9, while cutter of tunneling machine 6 is driven.

While propelling tunneling machine 6 and double-wall pipes A, winch 7 is driven so that wire 8 is wound on winch 7, thereby supply pipe 11 is unwound from drum 13 so that supply pipe 11, injecting member F, and cleaning member 21 are moved into sheath pipe 3. During this travel, the inside of sheath pipe 3 is cleaned by means of cleaning member 21.

The position of injecting member F is detected by reading mark lla put on supply pipe 11. When packing means 16, 17 of injecting member F reach a position at which check valve 4 of double-wall pipe A is positioned between packing means 16, 17, winch 7 is stopped, compressed gas is supplied to packing means 16, 17 so that tubes 18 are inflated, while lubricant is forced by pump 14. Lubricant fed through supply pipe 11 is sent into a space within sheath pipe 3 sealed by packing means 16, 17 through outlet 16c formed in packing means 16, and injected into space 5 formed between double-wall pipes A and the ground.

As above-mentioned, the frictional force between double-wall pipes A and the ground generated during the propulsion of double-wall pipes A can be reduced.

When the propulsion of double-wall pipes A has been finished, pump 14 is stopped, while compressed gas supplied to packing means 16, 17 is discharged from packing means 16, 17 so that tubes 18 are deflated. Thereafter, pipe-jacking machine 9 is returned to the initial condition, and thereafter drum 13 is driven so that wire 8 with supply pipe 11,injecting member F and cleaning member 21 is drawn out through sheath pipe 3 toward start vertical shaft C. After wire 8 has been drawn out toward start vertical shaft C, wire 8 is disconnected from sheath pipe 3 and drawn toward start vertical shaft C.

Second double-wall pipe A is disposed on pipe-jacking machine 9, wire 8 is passed through sheath pipe 3 provided in double-wall pipes A, and connected with cleaning member 21. Thereafter, the same operation as the above-mentioned operation is repeated by which double-wall pipes A can be propelled from start vertical shaft C toward arrival vertical shaft D, while lubricant is injected into space 5 formed between double-wall pipes A and the ground.

When cleaning member 21, injecting member F, and supply pipe 11 are moved in sheath pipe 3, cleaning plates 21b forming cleaning member 21, a part of injecting member F, and supply pipe 11 are brought into contact with the inside of sheath pipe 3. Therefore, a resistance force caused by the friction of cleaning plates 21b, a part of injecting member F, and supply pipe 11 with the inside of sheath pipe 3, and a force needed for drawing supply pipe 11 are applied on winch 7 and drive 12 of drum 13. This load is increased as the laying length of double-wall pipes A increases. Therefore, there is a problem that it is necessary to increase outputs of winch 7, drive 12 of drum 13 or to thicken wire 8. Further, there is a problem that supply pipe 11 stretches.

In order to solve the above-mentioned problem, cleaning member 21, according to the invention, injecting member F, and supply pipe 11 are moved in sheath 3, while lubricant is intermittently discharged from injecting member F. Namely, when lubricant is supplied through injecting member F without inflating packing means 16, 17 of injecting member F, the lubricant is discharged from outlet 16c of packing means 16 into the inside of sheath pipe 3.

When injecting member F is moved toward start vertical shaft C, lubricant which is injected into sheath pipe 3 remains within sheath pipe 3, a portion of supply pipe 11 which comes into contact with sheath pipe 3 is lubricated with lubricant which has remained so that a frictional force between supply pipe 11 and sheath pipe 3 can be reduced.

When injecting member F is moved toward start vertical shaft C,lubricant which has been discharged and remained in sheath pipe 3 is scratched by cleaning plate 21b,wherein contact resistance between cleaning plate 21b and sheath pipe 3 can be reduced.

Further, packing means 16, 17 forming injecting member F can be mounted at the same intervals as the length of double-wall pipe A, or at the same intervals as the length of a plurality of double-well pipes A. Thereby, even if the supply pipe has any elongation, the position of injecting member F in sheath pipe 3 can be easily established so that check valve 4 of double-wall pipe A can be positioned between packing means 16, 17.

Prior to supplying lubricant into double-wall pipes A while being propelled, operations as moving injecting members F and supply pipe 11 in sheath pipe 14, and connecting double-wall pipe A which has been propelled with a new double-wall pipe A are frequently carried out. Therefore, it is preferable that guide unit 22 is mounted at start vertical shaft C, which makes it easy to move supply pipe 11.

As above-mentioned, conduit B comprised of double-wall pipes A is laid between start vertical shaft C and arrival vertical shaft D, and thereafter back-filling material.can be injected, while the connection of tunneling machine 6 with first double-wall pipe A which is the component of conduit B is maintained.

As above-mentioned, injection of back-filling material can be carried out by carrying out the same operation as the injection of lubricant: pump 14 connected with a tank in which back-filling material is put is connected with supply pipe 11 provided with injecting member F. At this time,a pump and a supply pipe for exclusive use for back-filling material may be used as pump 14 and supply pipe 11. However, they have the same structure as that of a pump and a supply pipe for lubricant. Further, cleaning member 21 is not necessary needed.

Injecting member F and supply pipe 11 are moved through sheath pipe 3 provided in double-wall pipes A forming conduit B which has been laid,to the double-wall pipe A which is in the forefront, and thereafter pump 14 is driven by which back-filling material is injected through check valve 4 into the space 5 between the outside of the double-wall pipe A which is in the forefront and the ground.Further, while supply pipe 11 is pulled back toward start vertical shaft C, back-filling material is injected into space 5 between the outside of double-wall pipe A and the ground, at positions where the supply pipe 11 is opposed to each check valve 4 in order. When the injection of back-filling material into space 5 formed between double-wall pipe A near to start vertical shaft A and the ground through check valve 4 provided in the double-wall pipe A near to start vertical shaft A is finished,the filling of space 5 formed between conduit B and the ground with back-filling material is finished.

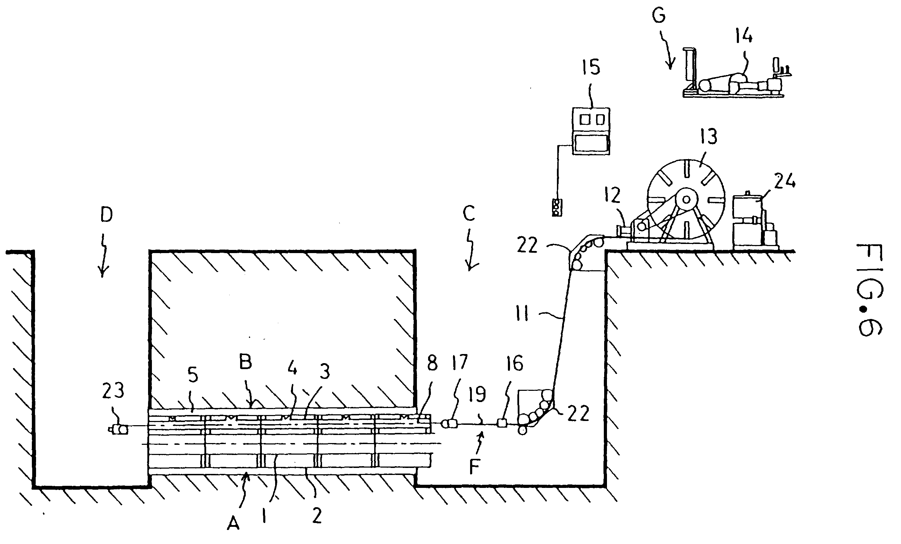

Then, another embodiment of a method of injecting back-filling material into space 5 formed between conduit B laid between start vertical shaft C and arrival vertical shaft D and the ground is explained referring to Figs. 6 to 11, wherein like reference characters designate like or corresponding parts throughout, about which explanation is omitted.

After conduit B has been laid between start vertical shaft C and arrival vertical shaft D, tunneling machine 6 is separated from the double-wall pipe A which is in the forefront and taken out of arrival vertical shaft D.

As shown in Fig. 6, winch 23 on which wire 8 inserted into sheath pipes 3 provided in double-wall pipes A is wound is mounted in arrival vertical shaft D, and back-filling material feeder G is mounted. Back-filling material feeder G comprises mixer 24 and pump 14. Back-filling material is mixed in mixer 24 and forced by pump 14 to be sent through supply pipe 11 into a space formed between conduit B and the ground.

Wire 8 unwound from winch 23 is sent through the inside of sheath pipes 3 toward start vertical shaft C, and connected with injecting member F provided in supply pipe 11.

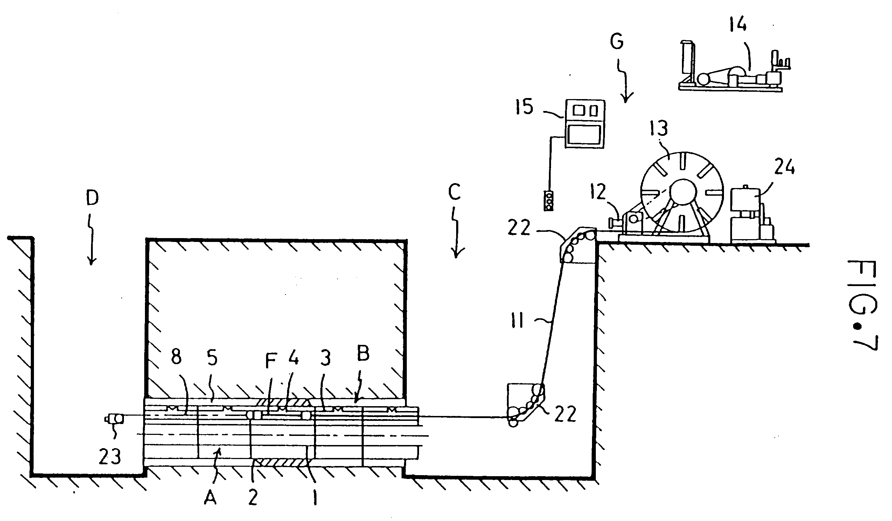

Then, as shown in Fig. 7, wire 8 is wound on winch 23 by driving winch 23 so that injecting member F and supply pipe 11 are moved into sheath pipe 3 to such a position that injecting member F is opposed to a check valve 4 positioned nearly in the center of conduit B. When injecting member F is sent at such a position that injecting member F is opposed to the given check valve 4, packing means 16, 17 are inflated so that the inside of sheath pipe 3 between packing means 16, 17 is sealed, and thereafter back-filling material is supplied through supply pipe 11 into the inside of sheath pipe 3 from injecting member F. Back-filling material supplied from back-filling material feeder G is discharged from injecting member F, and injected through check valve 4 into space 5 formed between outer pipe 2 of double-wall pipe A and the ground. When injecting amount of back-filling material reaches the given amount, pump 14 is stopped.

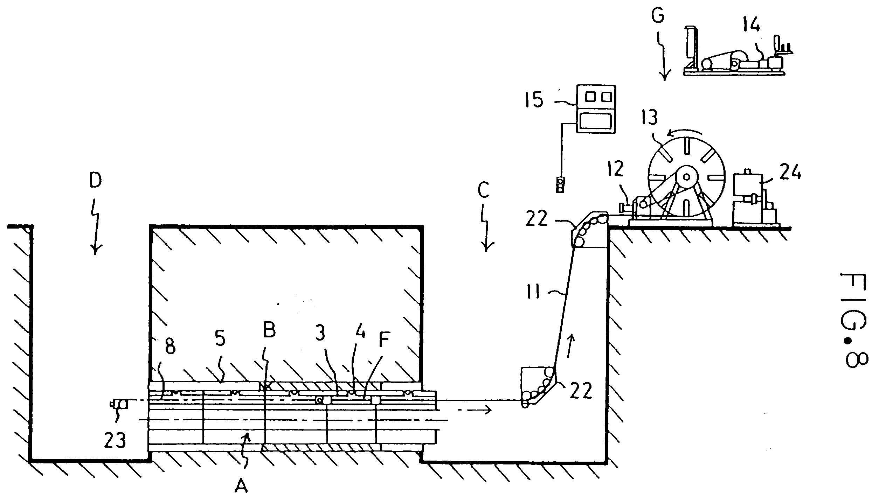

Then, as shown in Fig. 8, injecting member F is moved back toward start vertical shaft C by winding supply pipe 11 on drum 13 by driving drum 13 by which injecting member F is opposed to check valve 4 provided in a double-wall pipe A near to start vertical shaft C side of double-wall pipe A wherein a space between the outside of the double-wall pipe A and the ground has been filled with back-filling material, and back-filling material is injected into space 5 between conduit B and the ground by carrying out the same operation as the above-mentioned operation.

Then, in the same manner, back-filling material is injected into space 5 between the outer pipes 2 of double-wall pipes A arranged on start vertical shaft C side and the ground. Thereby, back-filling material can be injected into the space 5 between a portion of conduit B having approximately the half length of the full length thereof and the ground.

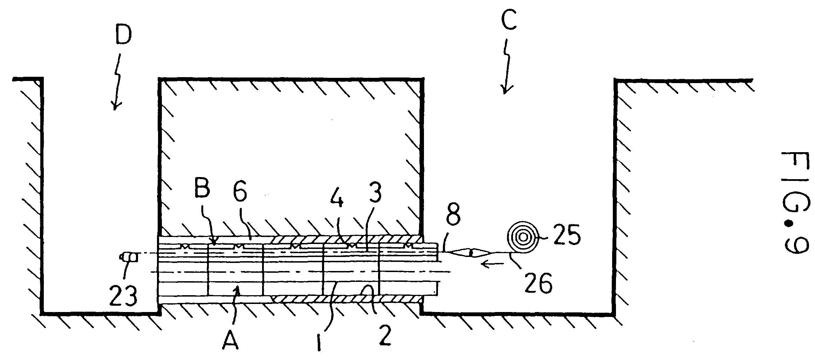

As above-mentioned, the space 5 around a half portion of conduit B extending from approximately the center of conduit B toward the start vertical shaft C and the ground can be filled with back-filling material, and thereafter as shown in Fig 9, wire reel 25 is equipped in start vertical shaft C,and auxiliary wire 26 wound on wire reel 25 is connected with wire 8.Auxiliary wire 26 is unwound by driving winch 23 equipped in arrival vertical shaft D so that the forward end of auxiliary wire 26 comes to arrival vertical shaft D.

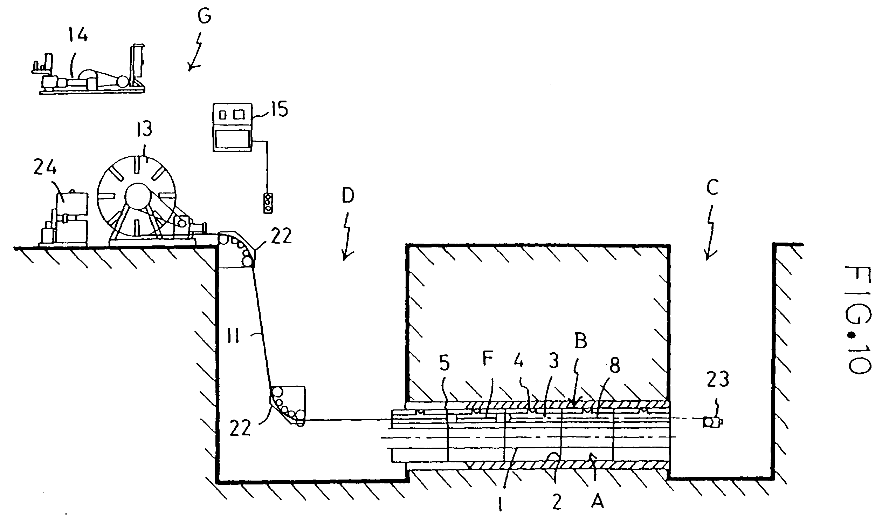

Then, as shown in Fig. 10, winch 23 is equipped in starting vertical shaft C, while back-filling material feeder G in arrival vertical shaft D . After injecting member F is connected with 8, injecting member F and supply pipe 11 are inserted into sheath pipe 3 so that the forward end of injecting member F comes to nearly a center of conduit B and the forward end of injecting member F is opposed to check valve 4 provided in the double-wall pipe A adjacent to double-wall pipes A wherein space 5 between the double-wall pipes A and the ground has been filled with back-filling material, and back-filling material is injected through the check valve 4 into space 5 between outer pipe 2 of the first double-wall pipe A and the ground.

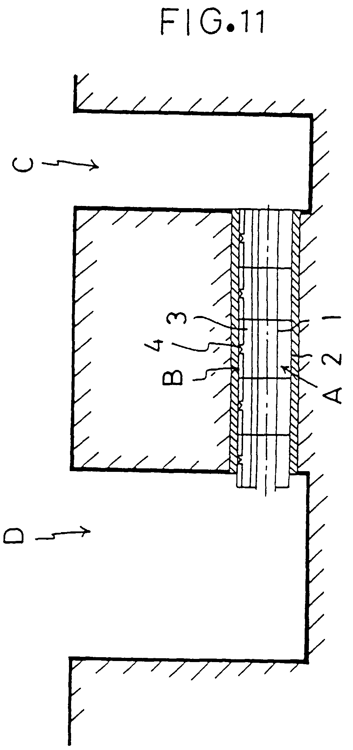

Then, the forward end of injecting member F is moved to positions at which the forward end of injecting member F is opposed to check valves 4 of second, third and other double-wall pipes A arranged on a side of arrival vertical shaft D one by one, and at the respective positions, back-filling material can be injected into space 5 between outer pipes 2 of double-wall pipes A and the ground over the full length of conduit B as shown in Fig.11.

## Claims

1. A method of injecting lubricant or back-filling material into a space between the outside of double-wall pipes (A) and the ground in laying a conduit comprised of double-wall pipes in the ground by the pipe-jacking method, each of said double-wall pipes (A) comprising an inner pipe (1) and an outer pipe (2) and being provided with a sheath pipe (3) into which a lubricant or back-filling material supply pipe (11) is inserted, between the inner pipe and the outer pipe and with a check valve (4) through which lubricant or back-filling material is injected into a space (5) between the outside of the double-wall pipes and the ground in the outer pipe, the method comprising the steps of:
inserting a wire (8) into the sheath pipe (3) from one end thereof toward the other end thereof and the wire being connected with the lubricant or back-filling material supply pipe (11);
thereafter, putting the lubricant or back-filling material supply pipe (11) in the sheath pipe (3) by drawing the wire (8) so that an outlet (16c) of the lubricant or back-filling material supply pipe (11) is opposed to the check valve (4); and
sending lubricant or back-filling material to the check valve (4) through the sheath pipe (3) and injecting lubricant or back-filling material through the check valve (4) into a space (5) between the outside of the double-wall pipes and the ground.

2. A method of injecting lubricant or back-filling material into a space between the outside of double-wall pipes and the ground as claimed in claim 1, wherein the lubricant or back-filling material supply pipe (11) includes two packing means (16,17) disposed at a given interval and an injecting member (F) with an outlet (16c) disposed between the packing means, and the method further comprises the step of inflating the packing means when the injecting member comes to a position at which the injecting member is opposed to a check valve (4) so that the inside of the sheath pipe is partitioned by the inflated packing means and fixing the injecting member (F).

3. A method of injecting lubricant or back-filling material into a space between the outside of double-wall pipes and the ground as claimed in claim 1, wherein lubricant or back-filling material is intermittently injected into the sheath pipe (3), while the lubricant or back-filling material supply pipe (11) is moved in the sheath pipe.

4. A method of injecting lubricant or back-filling material into a space between the outside of double-wall pipes and the ground as claimed in claim 1, wherein a cleaning member (21) which is brought into contact with the inside of the sheath pipe (3) is connected with the injecting member (F) so that the inside of the sheath pipe (3) is cleaned by the cleaning member (21) while the lubricant or back-filling material supply pipe (11) is moved in the sheath pipe.

5. An apparatus for injecting lubricant or back-filling material into a space between the outside of double-wall pipes (A) and the ground in laying a conduit comprised of double-wall pipes in the ground by the pipe-jacking method, each of said double-wall pipes (A) comprising an inner pipe (1) and an outer pipe (2) and being provided with a sheath pipe (3) into which a lubricant or back-filling material supply pipe (11) is inserted, between the inner pipe and the outer pipe and with a check valve (4) through which lubricant or back-filling material is injected into a space (5) between the outside of the double-wall pipes and the ground, the apparatus comprising a drum (13) on which a lubricant or back-filling material supply pipe (11) is wound, a drive (12) for driving the drum, a lubricant or back-filling material supply apparatus (14) connected with one end of the back-filling material supply pipe (11), and a winch (7) on which a wire (8) which is inserted into the sheath pipe (3) and connected with the lubricant or back-filling material supply pipe (11) to draw the lubricant or back-filling material supply pipe is wound.

6. An apparatus as claimed in claim 5, wherein the winch (7) is mounted in a tunneling machine (6).

7. An apparatus as claimed in claim 5, wherein the outside of the lubricant or back-filling material supply pipe (11) is graduated.

8. An apparatus as claimed in claim 5, wherein the lubricant or back-filling material supply pipe (11) is provided with packing means (16,17) having tubes (19) made of flexible material at the forward end of the lubricant or back-filling material supply pipe, the packing means are connected with a pressure fluid supply means (20) so that a pressure fluid is supplied to the packing means to inflate the tubes thereof to such an extent that the tubes are brought into contact with the inside of the sheath pipe (3) by which the packing means are fixed to the sheath pipe.

9. An apparatus as claimed in claim 8, wherein the lubricant or back-filling material supply pipe is provided with two packing means (16,17) which are disposed at an interval being equal to the length of a double-wall pipe (A) to be propelled, at the forward end of the lubricant or back-filling material supply pipe (11).

10. An apparatus as claimed in claim 8, wherein the packing means (16,17) are connected with a cleaning member (21) for cleaning the inside of the sheath pipe.

11. An apparatus as claimed in claim 10, wherein the cleaning member (21) is made of flexible material and has a diameter being about equal to the inner diameter of the sheath pipe (3) or more.

## Patentansprüche

1. Verfahren zum Einspritzen von Schmiermittel oder Hinterfüllungsmaterial in einen Zwischenraum zwischen der Außenseite von doppelwandigen Rohren (A) und dem Boden beim Legen eines aus doppelwandigen Rohren bestehenden Kanals in den Boden durch das Rohrhebeverfahren, wobei jedes der doppelwandigen Rohre (A) ein inneres Rohr (1) und ein äußeres Rohr (2) umfaßt und mit einem Hülsenrohr (3), in welches ein Zuflußrohr (11) für Schmiermittel oder Hinterfüllungsmaterial eingeführt wird, zwischen dem inneren Rohr und dem äußeren Rohr ausgestattet ist, sowie mit einem Rückschlagventil (4), wodurch Schmiermittel oder Hinterfüllungsmaterial in einen Zwischenraum (5) zwischen der Außenseite der doppelwandigen Rohre und dem Boden in dem äußeren Rohr eingespritzt wird, wobei das Verfahren aus den folgenden Schritten besteht:
Einführen eines Drahtes (8) in das Hülsenrohr (3) von dessen einem Ende zu dessen anderem Ende, wobei der Draht mit dem Zuflußrohr (11) für Schmiermittel oder Hinterfüllungsmaterial verbunden ist;
danach Anordnen des Zuflußrohrs (11) für Schmiermittel oder Hinterfüllungsmaterial in dem Hülsenrohr (3) durch Ziehen des Drahtes (8), so daß ein Auslaß (16c) des Zuflußrohrs (11) für Schmiermittel oder Hinterfüllungsmaterial dem Rückschlagventil (4) gegenüber liegt; sowie
Senden von Schmiermittel oder Hinterfüllungsmaterial zu dem Rückschlagventil (4) durch das Hülsenrohr (3) und Einspritzen von Schmiermittel oder Hinterfüllungsmaterial durch das Rückschlagventil (4) in einen Zwischenraum (5) zwischen der Außenseite der doppelwandigen Rohre und dem Boden.

2. Verfahren zum Einspritzen von Schmiermittel oder Hinterfüllungsmaterial in einen Zwischenraum zwischen der Außenseite der doppelwandigen Rohre und dem Boden nach Anspruch 1, wobei das Zuflußrohr (11) für Schmiermittel oder Hinterfüllungsmaterial zwei Versatzeinrichtungen (16, 17), die in einem bestimmten Abstand angeordnet sind, und ein Einspritzelement (F) mit einem Auslaß (16c), das zwischen den Versatzeinrichtungen angeordnet ist, umfaßt, und wobei das Verfahren weiterhin den Schritt des Auffüllens der Versatzeinrichtungen umfaßt, wenn das Einspritzelement in eine Position gelangt, an der das Einspritzelement gegenüber einem Rückschlagventil (4) liegt, so daß die Innenseite des Hülsenrohrs durch die aufgefüllten Versatzeinrichtungen unterteilt ist und das Einspritzelement (F) festsetzt.

3. Verfahren zum Einspritzen von Schmiermittel oder Hinterfüllungsmaterial in einen Zwischenraum zwischen der Außenseite von doppelwandigen Rohren und dem Boden nach Anspruch 1, wobei Schmiermittel oder Hinterfüllungsmaterial absatzweise in das Hülsenrohr (3) eingespritzt wird, während das Zuflußrohr (11) für Schmiermittel oder Hinterfüllungsmaterial in dem Hülsenrohr bewegt wird.

4. Verfahren zum Einspritzen von Schmiermittel oder Hinterfüllungsmaterial in einen Zwischenraum zwischen der Außenseite von doppelwandigen Rohren und dem Boden nach Anspruch 1, wobei ein Reinigungselement (21), welches mit der Innenseite des Hülsenrohrs (3) in Berührung gebracht wird, mit dem Einspritzelement (F) verbunden ist, so daß die Innenseite des Hülsenrohrs (3) durch das Reinigungselement (21) gereinigt wird, während das Zuflußrohr (11) für Schmiermittel oder Hinterfüllungsmaterial in dem Hülsenrohr bewegt wird.

5. Vorrichtung zum Einspritzen von Schmiermittel oder Hinterfüllungsmaterial in einen Zwischenraum zwischen der Außenseite von doppelwandigen Rohren (A) und dem Boden beim Legen eines aus doppelwandigen Rohren bestehenden Kanals in den Boden durch das Rohrhebeverfahren, wobei jedes der doppelwandigen Rohre (A) ein inneres Rohr (1) und ein äußeres Rohr (2) umfaßt und mit einem Hülsenrohr (3), in welches ein Zuflußrohr (11) für Schmiermittel oder Hinterfüllungsmaterial eingeführt wird, zwischen dem inneren Rohr und dem äußeren Rohr ausgestattet ist, sowie mit einem Rückschlagventil (4), wodurch Schmiermittel oder Hinterfüllungsmaterial in einen Zwischenraum (5) zwischen der Außenseite der doppelwandigen Rohre und dem Boden eingespritzt wird, wobei die Vorrichtung eine Trommel (13) umfaßt, auf der ein Zuflußrohr (11) für Schmiermittel oder Hinterfüllungsmaterial gewickelt ist, sowie einen Antrieb (12) zum Antreiben der Trommel, eine Zuflußeinrichtung (14) für Schmiermittel oder Hinterfüllungsmaterial, die mit einem Ende des Zuflußrohres (11) für Hinterfüllungsmaterial verbunden ist, und ein Hebezeug (7), auf dem ein Draht (8) gewickelt ist, welcher in das Hülsenrohr (3) eingeführt wird und mit dem Zuflußrohr (11) für Schmiermittel oder Hinterfüllungsmaterial verbunden ist, um das Zuflußrohr für Schmiermittel oder Hinterfüllungsmaterial zu ziehen.

6. Vorrichtung nach Anspruch 5, wobei das Hebezeug (7) in einer Flözstreckenvortriebsmaschnine (6) montiert ist.

7. Vorrichtung nach Anspruch 5, wobei die Außenseite des Zuflußrohres (11) für Schmiermittel oder Hinterfüllungsmaterial abgestuft ist.

8. Vorrichtung nach Anspruch 5, wobei das Zuflußrohr (11) für Schmiermittel oder Hinterfüllungsmaterial mit Versatzeinrichtungen (16, 17) ausgestattet ist, die Röhren (19) aus flexiblem Material an dem vorderen Ende des Zuflußrohres für Schmiermittel oder Hinterfüllungsmaterial aufweisen, wobei die Versatzeinrichtungen mit einer Druckfluidzuflußeinrichtung (20) verbunden sind, so daß ein Druckfluid in die Versatzeinrichtungen zugeführt wird, um dessen Röhren in solchem Maße aufzufüllen, daß die Röhren mit der Innenseite des Hülsenrohres (3) in Berührung gebracht werden, wodurch die Versatzeinrichtungen an dem Hülsenrohr festgesetzt werden.

9. Vorrichtung nach Anspruch 8, wobei das Zuflußrohr für Schmiermittel oder Hinterfüllungsmaterial zwei Versatzeinrichtungen (16, 17) aufweist, die in einem der Länge des doppelwandigen vorwärtszutreibenden Rohres (A) entsprechenden Abstand an dem vorderen Ende des Zuflußrohres (11) für Schmiermittel oder Hinterfüllungsmaterial angebracht sind.

10. Vorrichtung nach Anspruch 8, wobei die Versatzeinrichtungen (16, 17) mit einem Reinigungselement (21) zum Reinigen der Innenseite des Hülsenrohres verbunden sind.

11. Vorrichtung nach Anspruch 10, wobei das Reinigungselement (21) aus flexiblem Material besteht und einen Durchmesser hat, der ungefähr genauso groß wie oder größer als der Innendurchmesser des Hülsenrohrs (3) ist.

## Revendications

1. Un procédé pour injecter du lubrifiant ou du matériau de remplissage dans un espace entre l'extérieur de tuyaux à double paroi (A) et le sol lors de la pose d'un conduit constitué de tuyaux à double paroi dans le sol au moyen du procédé pousse-tube, chacun desdits tuyaux à double paroi (A) comprenant un tuyau intérieur (1) et un tuyau extérieur (2) et étant pourvu d'une gaine (3) dans laquelle un tuyau d'alimentation de lubrifiant ou de matériau de remplissage (11) est inséré, entre le tuyau intérieur et le tuyau extérieur, et d'un clapet anti-retour (4) au-travers duquel le lubrifiant ou le matériau de remplissage est injecté dans un espace (5) entre l'extérieur des tuyaux à double paroi et le sol dans le tuyau extérieur, le procédé comprenant les étapes de:
insérer un câble (8) à l'intérieur de la gaine (3) depuis une de ses extrémités vers son autre extrémité, le câble étant connecté au tuyau d'alimentation de lubrifiant ou de matériau de remplissage (11);
après quoi, insérer le tuyau d'alimentation de lubrifiant ou de matériau de remplissage (11) à l'intérieur de la gaine (3) en tirant le câble (8) de sorte qu'une sortie (16c) du tuyau d'alimentation de lubrifiant ou de matériau de remplissage (11) soit en face du clapet anti-retour (4); et
envoyer le lubrifiant ou le matériau de remplissage vers le clapet anti-retour (4) le long de la gaine (3) et injecter le lubrifiant ou le matériau de remplissage au-travers du clapet anti-retour (4) à l'intérieur d'un espace (5) entre l'extérieur des tuyaux à double paroi et le sol.

2. Un procédé pour injecter du lubrifiant ou du matériau de remplissage dans un espace entre l'extérieur de tuyaux à double paroi et le sol selon la Revendication 1, dans lequel le tuyau d'alimentation de lubrifiant ou de matériau de remplissage (11) comprend deux moyens de remplissage (16, 17) disposés à un intervalle donné et un élément d'injection (F) avec une sortie (16c) agencée entre les moyens de remplissage, le procédé comprenant en outre l'étape de gonfler les moyens de remplissage lorsque l'élément d'injection arrive à une position pour laquelle l'élément d'injection se trouve en face d'un clapet anti-retour (4) de sorte que l'intérieur de la gaine soit partagée par les moyens de remplissage gonflés et de fixer l'élément d'injection (F).

3. Un procédé pour injecter du lubrifiant ou du matériau dans un espace entre l'extérieur de tuyaux à double paroi et le sol selon la Revendication 1, dans lequel le lubrifiant ou le matériau de remplissage est injecté de manière intermittante à l'intérieur de la gaine (3) tandis que le tuyau d'alimentation de lubrifiant ou de matériau de remplissage (11) se déplace dans la gaine.

4. Un procédé pour injecter du lubrifiant ou du matériau de remplissage dans un espace entre l'extérieur de tuyaux à double paroi et le sol selon la Revendication 1, dans lequel un élément de nettoyage (21) qui est amené en contact avec l'intérieur de la gaine (3) est connecté à l'élément d'injection (F) de sorte que l'intérieur de la gaine (3) soit nettoyée à l'aide de l'élément de nettoyage (21) tandis que le tuyau d'alimentation de lubrifiant ou de matériau de remplissage (11) se déplace dans la gaine.

5. Un dispositif pour injecter du lubrifiant ou du matériau de remplissage dans un espace entre l'extérieur de tuyaux à double paroi (A) et le sol lors de la pose d'un conduit constitué de tuyaux à double paroi dans le sol à l'aide du procédé pousse-tube, chacun desdits tuyaux à double paroi (A) comprenant un tuyau intérieur (1) et un tuyau extérieur (2) et étant pourvu d'une gaine (3) à l'intérieur de laquelle un tuyau d'alimentation de lubrifiant ou de matériau de remplissage (11) est inséré, entre le tuyau intérieur et le tuyau extérieur, et d'un clapet anti-retour (4) au-travers duquel le lubrifiant ou le matériau de remplissage est injecté dans un espace (5) entre l'extérieur des tuyaux à double paroi et le sol, le dispositif comprenant un tambour (13) sur lequel un tuyau d'alimentation de lubrifiant ou de matériau de remplissage (11) est enroulé, un entraînement (12) pour entraîner le tambour, un dispositif d'alimentation de lubrifiant ou de matériau de remplissage (14) connecté à une extrémité du tuyau d'alimentation de lubrifiant ou de matériau de remplissage (11), et un treuil (7) sur lequel est enroulé un câble (8) qui est inséré à l'intérieur de la gaine (3) et connecté au tuyau d'alimentation de lubrifiant ou de matériau de remplissage (11) pour tirer le tuyau d'alimentation de lubrifiant ou matériau de remplissage.

6. Un dispositif selon la Revendication 5, dans lequel le treuil (7) est monté en un bouclier (6).

7. Un dispositif selon la Revendication 5, dans lequel l'extérieur du tuyau d'alimentation de lubrifiant ou de matériau de remplissage (11) est gradué.

8. Un dispositif selon la Revendication 5, dans lequel le tuyau d'alimentation de lubrifiant ou de matériau de remplissage (11) est pourvu de moyens de remplissage (16, 17) ayant des tuyaux (19) constitués de matériau souple à l'extrémité avant du tuyau d'alimentation de lubrifiant ou de matériau de remplissage, les moyens de remplissage sont connectés à un moyen d'alimentation de fluide de pression (20) de sorte qu'un fluide de pression soit acheminé vers les moyens de remplissage afin de gonfler ses tubes jusqu'à une limite telle que les tubes soient amenés en contact avec l'intérieur de la gaine (3) au moyen duquel les moyens de remplissage sont fixés à la gaine.

9. Un dispositif selon la Revendication 8, dans lequel le tuyau d'alimentation de lubrifiant ou de matériau de remplissage est pourvu de deux moyens de remplissage (16, 17) qui sont disposés à un intervalle égal à la longueur d'un tuyau à double paroi (A) à propulser, à l'extrémité avant du tuyau d'alimentation de lubrifiant ou matériau de remplissage (11).

10. Un dispositif selon la Revendication 8, dans lequel les moyens de remplissage (16, 17) sont connectés à l'élément de nettoyage (21) afin de nettoyer l'intérieur de la gaine.

11. Un dispositif selon la Revendication 10 dans lequel l'élément de nettoyage (21) est constitué de matériau souple et possède un diamètre étant environ égal au diamètre intérieur de la gaine (3) ou plus grand.
